# EUROPÄISCHE PATENTSCHRIFT

(11) **EP 0 411 387 B1**
(45) Veröffentlichungstag und Bekanntmachung des Hinweises auf die Patenterteilung: **02.02.1994**
(21) Anmeldenummer: 90113702.6
(22) Anmeldetag: 17.07.1990
(51) Int. Cl.: B23B 3/06, B23Q 5/56

(54) **C-Achsgetriebe**
C-axis-gearing
Engrenage à axe C

(30) Priorität: 02.08.1989 DE 3925601
(43) Veröffentlichungstag der Anmeldung: 06.02.1991
(73) Patentinhaber: Boehringer Werkzeugmaschinen GmbH, D-73002 Göppingen (DE)
(72) Erfinder: Kuhn, Siegfried, Ing. Grad., D-7321 Dürnau (DE); Mühlich, Werner, D-7334 Süssen (DE); Räder, Robert, Ing., D-7320 Göppingen (DE); Ritz, Otmar, Dipl.-Ing., D-7321 Wangen (DE); Schulten, Hermann, Ing., D-7321 Birenbach (DE); Unruh, Manfred, Dipl.-Ing. (FH), D-7320 Göppingen (DE)
(74) Vertreter: Vogeser, Werner, Dipl.-Ing.

(56) Entgegenhaltungen:
- DE-A- 3 638 929
- DE-C- 3 438 309
- US-A- 4 632 612

## Beschreibung

Drehmaschinen sind heute überwiegend auch mit angetriebenen Werkzeugen ausgestattet, die nicht nur axial am Werkstück arbeiten können, sondern auch radial oder tangential.

Zu diesem Zweck muß das Werkstück stillgesetzt und in eine bestimmte Drehlage gebracht bzw. während der radialen oder tangentialen Bearbeitung langsam weitergedreht werden.

Für diese allgemein als C-Achse bezeichnete definierte Positionierung bzw. Drehung des Werkstückes sind immerhin noch ein Drittel bis ein Viertel der Hauptantriebskraft nötig, wenn beispielsweise stark unwuchtige Werkstücke positioniert oder beispielsweise zwecks Herstellung von Kurvenführungen etc. in der Umfangsfläche eines Werkstückes gegen die Schnittkraft des angetriebenen Werkzeuges das Werkstück langsam gedreht werden muß.

Derartige Positionierungen und langsame Drehbewegungen müssen sehr genau vollzogen werden können, wobei etwa 1/10.000 Winkel-Grad angestrebt werden. Eine derartige Genauigkeit kann jedoch durch Drehung beispielsweise über das bereits vorhandene Getriebe der Hauptspindel, welches üblicherweise spielbehaftet ist, um den Getriebeverschleiß in Grenzen zu halten, nicht erreicht werden.

Infolge dessen wurde die definierte Bestimmung der Drehlage des Werkstückes bzw. dessen langsame, sehr genau definierte Drehung bisher dadurch gelöst, daß ein auf der Hauptspindel spielfrei und drehfest angeordnetes sogenanntes Bodenrad für den besagten Antrieb der C-Achse ohne Zwischenschaltung weiterer spielbehafteter Getriebezüge direkt angetrieben wurde. Zusätzlich wurde versucht, diesen direkten Antrieb des Bodenrades möglichst spielfrei zu gestalten, um hierdurch die Positioniergenauigkeit der C-Achse zu optimieren. Dies geschah beispielsweise dadurch, daß das Bodenrad ein parallel zur Drehachse und gerade verzahntes Zahnrad war, in welches zum Antrieb der C-Achse ein entsprechendes Zahnrad einrückbar war, welches jedoch in einer Ebene senkrecht zur Drehachse des eingerückten Zahnrades geteilt war. Diese beiden Hälften des eingerückten Zahnrades konnten mittels Federkraft oder ähnlichem gegeneinander versetzt werden, wodurch der Zahneingriff mit dem Gegenrad weitgehend spielfrei gehalten werden konnte.

Eine andere Lösung besteht darin, die Spielfreiheit durch Überbrückung, also einen Kurzschluß, des normalen Getriebezuges zu erreichen, indem zwischen das erste und letzte Zahnrad des Getriebezuges ein zusätzliches Zahnrad z.B. radial eingefahren werden kann, um dadurch eine spielfreie Verbindung des ersten zum letzten Getriebezahnrades zu erreichen. Dazu müssen jedoch relativ hohe radiale Drücke auf dieses Zwischenrad aufgebracht werden und dieses Zahnrad und dessen Bewegungsmöglichkeiten müssen zusätzlich zu den vorhandenen Getriebezügen vorgesehen sein. Darüber hinaus sind das erste und letzte, also die beiden miteinander zu verbindenden Zahnräder, des Getriebes, in einer fluchtenden Stellung vorzusehen, um diesen Kurzschluß zu ermöglichen, wie etwa in der DE-A-3 438 309 vorgesehen.
Eine andere Lösung, wie bei der bisherigen VDF-C-Maschine der Anmelderin verwendet, bestand darin, dieses Bodenrad auf der Hauptspindel als Schneckenrad auszubilden, in welches bei Bedarf des C-Achsen-Antriebes eine Schnecke eingeschwenkt wurde. Um diese Schnecken/Schneckenradpaarung möglichst spielfrei halten zu können, mußte die Schnecke mit relativ hoher, meist hydraulisch aufgebrachter,Kraft gegen das Schneckenrad gepreßt werden. Zu diesem Zweck befand sich die Schnecke auf dem Ende einer relativ langen Welle, die in einer entsprechend dimensionierten Schwinge gelagert war, auf welche der hydraulische Druck zum Zusammenpressen der Schnecken/Schneckenradpaarung aufgebracht wurde.

Abgesehen davon, daß diese Schnecken/Schneckenradpaarung teuer in der Herstellung ist, wurde durch die genannte Ausführung des C-Achsantriebes viel Platz benötigt, da beispielsweise der Schwenkpunkt, um welche die Schwinge, in der die Schneckenwelle gelagert war, drehte, ebenfalls ausreichend stabil ausgebildet werden mußte, um die genannten hohen Antriebskräfte der C-Achse aufnehmen zu können.

Unabhängig davon, für welche der beschriebenen Arten das Bodenrad für die C-Achse betrieben wird, ist für den Antrieb entweder ein eigener Motor notwendig, oder der Antrieb vom bereits vorhandenen Motor des Hauptspindelantriebes muß so spielfrei zugeführt werden, daß die gewünschte Positioniergenauigkeit der C-Achse noch erreicht wird. In beiden Fällen bedeutet dies einen erheblichen finanziellen Aufwand, und zusätzlich einen mehr oder minder großen Verlust an Bauraum, da beispielsweise die Zuführung vom vorhandenen Motor des Hauptspindelgetriebes nur unter Hinzufügung zusätzlicher Wellen und Zahnräder und damit Vergrößerung des Spindelkastens möglich ist. Ein weiterer Nachteil dieser C-Achsantriebe besteht darin, daß sie besonders bei der Realisierung über die Schnekken/Schneckenrad-Paarung, einem relativ starkem Verschleiß unterliegen, so daß sich mit zunehmender Betriebsdauer die Genauigkeit des C-Achsantriebes verringert.

Weiterhin ist aus der DE-PS 34 38 309 ein Werkstückspindelantrieb für Drehmaschinen gemäß dem Oberbegriff des Anspruches 1 bekannt. Allerdings ist dort das Bodenrad nicht direkt auf der Hauptspindel, sondern auf einer Riemenscheibe angebracht, von der aus die Hauptspindel wiederum angetrieben wird. Zusätzlich wird für den spielfreien Betrieb des Getriebes ein zusätzliches, von der ersten zur letzten Getriebewelle kurzschliessendes Zahnrad vorgesehen. Dieses Zahnrad stellt eine separate Getriebestufe dar einschl. der hierfür notwendigen Betätigungseinrichtungen. Dies erhöht den baulichen Aufwand für den Werkstückspindelantrieb.

Weiterhin ist es aus dem Artikel "spieleinstellbare Getriebe mit konischen Verzahnungen", erschienen in der Zeitschrift "Der Zuliefermarkt" vom April 1988 bekannt, Getriebe durch Verwendung leicht konischer Zahnräder und deren genaue Lagepositionierung mittels Gewindemuttern, Distanzscheiben etc. spielfrei einzustellen.

Eine Axialverschiebung dieser Zahnräder mit oder auf einer Welle während des Betriebes eines Getriebes ist aus diesem Artikel jedoch nicht zu entnehmen.

Es ist daher der Zweck der vorliegenden Erfindung, einen Antrieb der C-Achse mit der gewünschten Genauigkeit hinsichtlich der Übetragung von Drehzahlen und Drehlagen mit geringstmöglichem baulichem und damit finanziellem Aufwand zu schaffen, wobei nach Möglichkeit der mit zunehmender Betriebszeit auftretende und die Genauigkeit senkende Verschleiß ohne großen Aufwand kompensiert werden kann, und insbesondere keine zusätzlichen Zahnräder oder aufwendige bauliche Maßnahmen für den spielfreien C-Achsantrieb notwendig sein sollen.

Das zwischen dem Motor und der Arbeitsspindel angeordnete Getriebe besteht aus mehreren, in der Regel drei, Getriebewellen, von denen die erste vom Motor angetrieben wird und die letzte als Hauptspindel ausgebildet ist. Zum Antrieb der Hauptspindel werden heute überwiegend Wechselstrom-Motoren eingesetzt, die zwar wesentlich teuerer als die früher verwendeten Gleichstrom-Motoren sind, jedoch wegen des Wegfalls von Bürsten und Kollektoren einem geringeren Verschleiß unterliegen und vor allem den Vorteil der guten Regelbarkeit der Drehzahl bieten. Ein Mittelwert eines solchen Motors zum Antrieb der Hauptspindel wäre eine Nennleistung von etwa 30kw bei einer Höchstdrehzahl von 6300 U/Min. Ein derartiger Wechselstrom-Motor kann etwa bei einer auf 5 U/Min. reduzierten Drehzahl hinsichtlich seiner Drehlage bis auf 1/1000 Winkel-Grad genau positioniert werden.

Der genannte Zweck der Erfindung wird nun durch die Merkmale des Anspruchs 1 erfüllt, wobei diese genaue Regelbarkeit des Motors für den Hauptantrieb ohne Einbußen von Genauigkeit, also spielfrei, an die Hauptspindel weitergegeben wird, indem das zwischengeschaltete Getriebe eine Schaltposition umfaßt, bei der sämtliche Zahnrad-Paarungen aus speziellen, an sich bekannten, leicht konischen Zahnrädern bestehen, wie sie z.B. von der Firma Wittmann hergestellt werden, die so weit ineinander gefahren werden können, bis kein meßbares Spiel mehr vorhanden ist. Bei diesen Zahnrädern ist die Umfangsfläche nicht zylindrisch, sondern um etwa 2° konisch ausgebildet und in einem äquivalenten Maß ändert sich auch Höhe und Dicke der einzelnen Zähne entlang deren Längserstreckung. Über die endliche Breite eines Zahnrades finden also unendlich viele Profilverschiebungen entlang eines Zahnes statt. Derartige Zahnräder wurden bisher verwendet, um bei der Montage von Getrieben und ähnlichem ein vorgegebenes Spiel zwischen zwei Zahnrädern - wie es zur Vermeidung übermäßigen Verschleisses immer vorhanden sein muß - exakt einstellen zu können.Dies ist dadurch möglich, daß eine relativ große axiale Lageänderung des betreffenden Zahnrades notwendig ist, um eine bestimmte Änderung des einzustellenden Spieles zu bewirken. Derart große axiale Lageveränderungen sind jedoch leicht mittels Distanzscheiben und ähnlichem bei der Montage oder der Überholung eines Getriebes zu realisieren.

Im vorliegenden Fall sollen die Zahnräder jedoch bis zur Spielfreiheit ineinandergerückt werden. Dies hat zwar einen erhöhten Verschleiß dieser Zahnrad-Paarungen zur Folge, da jedoch der Antrieb der C-Achse nur einen prozentual äußerst geringen Anteil der Betriebszeit einer Drehmaschine beansprucht, kann dies in Kauf genommen werden, zumal sich ein Verschleiß dieser kegeligen Zahnräder nicht in einer nachlassenden Genauigkeit der Übertragung von Drehzahl und Drehlage der C-Achse äußerst, wenn diese kegeligen Zahnräder immer mit der gleichen Kraft ineinandergedrückt werden. Dann ändert sich lediglich die axiale Lage der Zahnräder im Einsatz, nicht jedoch deren Übertragungsgenauigkeit hinsichtlich Drehlage und Drehzahl.

Das Übersetzungsverhältnis beim Antrieb der C-Achse über die konischen Zahnräder ist natürlich gleich groß wie das kleinste übersetzungsverhältnis im normalen Antrieb der Hauptspindel, jedoch ist die Antriebsdrehzahl wesentlich kleiner aufgrund zusätzlicher geringerer Motordrehzahl. Für bestimmte Anwendungsfälle ist es jedoch notwendig, diese verringerte Drehzahl zu benutzen, ohne daß die Genauigkeit der Übertragung hinsichtlich Drehlage und Drehzahl notwendig ist, wie sie nur bei spielfreiem Ineinandergreifen der kegeligen Zahnräder erzielt werden kann. Für diesen Anwendungsfall ist es möglich, die Hauptspindel zwar über die Zahnrad-Paarungen der kegeligen Zahnräder anzutreiben, diese jedoch nicht bis zur Spielfreiheit ineinander zu fahren, sondern durch einen axialen Abstand von wenigen Millimetern ein spielbehaftetes, dem üblichen Zahnradtragbild entsprechendes, Ineinandergreifen der kegeligen Zahnräder zu erreichen. Hierdurch wird der Verschleiß der kegeligen Zahnräder nochmals reduziert.

Darüber hinaus gibt es natürlich wenigstens eine Schaltstellung des Getriebes, bei der die Hauptspindel über normale parallel verzahnte Zahnräder mit Nenndrehzahl angetrieben wird, wobei die leicht kegeligen Zahnräder ausser Eingriff sind.

Für den Fall, daß auf einer der Getriebewellen mehr als eines der leicht kegeligen Zahnräder sitzt, die verschoben werden können, sind zwei Möglichkeiten denkbar: Entweder ist der axiale Abstand der leicht konischen Zahnräder zueinander festgelegt, und diese können nur miteinander axial verschoben werden oder jedes dieser leicht kegeligen Zahnräder ist unabhängig voneinander axial verschiebbar.Im letzteren Fall muß dafür gesorgt werden, daß im Falle des Antriebs der C-Achse jedes dieser leicht kegeligen Zahnräder hydraulisch oder mittels Federkraft immer mit der gleichen Axialkraft gegen sein Gegenrad gedrückt wird.

Der Vorteil dieser Konstruktion besteht darin, daß über einen sehr langen Zeitraum trotz Verschleisses der Zahnräder keine Nachstellarbeiten oder Reparaturen erforderlich sind und ein gleichbleibend spielfreier Eingriff gewährleistet ist. Werden die leicht kegeligen Zahnräder dagegen nur gemeinsam axial verschoben, so ist immer bei einer dieser Zahnrad-Paarungen zuerst der spielfreie Zustand erreicht, während bei der oder den anderen Paarungen mit diesen Zahnrädern noch ein geringfügiges Spiel besteht. Dieses müsste bei der Montage des Getriebes durch Ausgleich mittels Distanzscheiben oder ähnlichem bis zum spielfreien Zustand optimiert werden. Würde sich jedoch im Verlaufe des Einsatzes ungleichmäßiger Verschleiß zwischen den verschiedenen leicht kegeligen Zahnrädern auf derselben Welle ergeben, so würde eine Neueinstellung des axialen Abstandes dieser Zahnräder zueinander erforderlich werden.

Der Vorteil besteht jedoch darin, daß für diese kegeligen Zahnräder, die gemeinsam auf einer Welle sitzen und verschiebbar sind, nur eine einzige Verschiebeeinrichtung notwendig ist.

Diese Verschiebeeinrichtung wird meist eine hydraulisch betätigte Kolben/Zylindereinheit sein, wobei es sich vorzugsweise um eine Doppelkolbenanordnung handeln wird, um auch mehr als zwei Schaltstellungen der zu verschiebenden Einheit zu ermöglichen. Diese Hydraulikeinheit kann etwa mit einem in die zu verschiebende Einheit eingreiffenden Schieber verbunden sein, dessen Stellung über die Steuerkanten eines Mehrwegeventiles kontrolliert und gesteuert wird.

Obwohl wenigstens eine der Stufen des Getriebes selbsthemmend ausgebildet ist, muß damit gerechnet werden, daß aufgrund stark unwuchtiger Werkstücke oder einer notwendigen langsamen Drehbewegung gegen eine hohe Schnittkraft eines angetriebenen Werkzeuges die Selbsthemmung überwunden werden könnte. Für derartige Fälle ist vorzugsweise eine mechanische Bremse, etwa eine Backenbremse an der Hauptspindel oder einer der anderen Getriebewellen, vorzusehen.

Um die Drehlage und auch die Drehzahl der Hauptspindel überwachen und steuern zu können, wird deren Stellung und Drehzahl durch eine Meßvorrichtung überwacht. Sofern die Geberelemente nicht die Drehung der Hauptspindel direkt abtasten, ist deren Drehung vorzugsweise über eine Riemenscheibe auf eine andere Riemenscheibe zu übertragen, die ausschließlich der Abtastung durch die Geberelemente, etwa opto-elektrische Sensoren, dient, und daher wegen des Fehlens irgendwelcher nennenswerter mechanischer Belastungen problemlos schlupffrei gegenüber der Hauptspindel selbst gehalten werden kann. Da die anzustrebende Genauigkeit der Lagepositionierung als auch der Drehzahlmessung für Nenndrehzahl und den wesentlich langsamerenn Betrieb der C-Achse sehr unterschiedlich ist, werden für diese beiden Bereiche vorzugsweise zwei unterschiedliche Sensoren eingesetzt.

Die Vorteile dieser Ausführung eines C-Achsenantriebes bestehen darin, daß nicht nur die Kosten für die Mitverwendung der leicht konischen Zahnräder wesentlich geringer sind als die der Ausbildung eines einschwenkbaren Schneckenantriebes oder eines spreizbaren zusätzlichen Antriebszahnrades, sondern daß darüber hinaus die Ausbildung mit den leicht kegelförmigen Zahnrädern auch einen wesentlichen geringeren Wartungsaufwand erfordert. Weiterhin ist die erfindungsgemäße Lösung mit wesentlich geringerem Platzbedarf gekoppelt und es ist eine höhere Genauigkeit des C-Achsenantriebes möglich, als sie der Stand der Technik bietet.

Anhand der Figuren werden im folgenden beispielhaft Ausführungsformen gemäß der Erfindung erläutert.
Es zeigen
- Fig. 1: die Prinzipdarstellung einer Drehmaschine,
- Fig. 2: eine Schemadarstellung des erfindungsgemäßen Antriebes und
- Fig. 3: eine detailliertere Darstellung eines erfindungsgemäßen Getriebes.

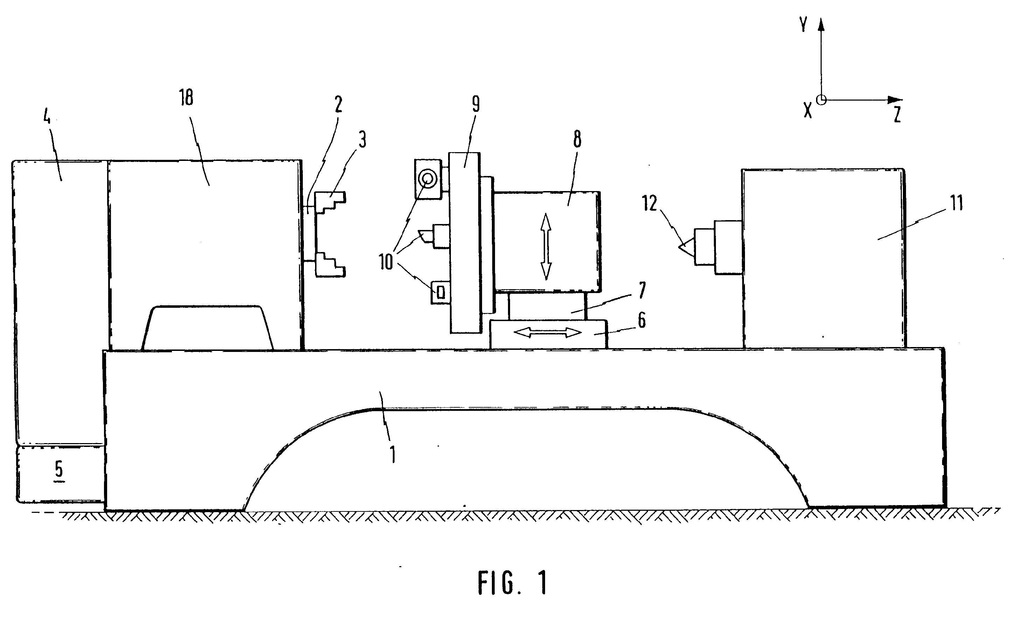

Fig. 1 zeigt eine übliche Drehmaschine, bei der der erfindungsgemäße Antrieb eingesetzt werden kann: Auf dem Bett 1 der Drehmaschine sitzt der Spindelstock 18, der zwischen, dem Getriebekasten 4 und dem anzutreibenden Futter 2 sitzt, an welchem beispielsweise mittels der Backen 3 ein nicht dargestelltes Werkstück befestigt und angetrieben werden kann. Am entgegengesetzten Ende der Werkzeugmaschine befindet sich der Reitstock 11, der eine Zentrierspitze zum Gegenhalten des Werkstückes aufweist. Zwischen Reitstock 11 und Spindelstock 18
befindet sich die Werkzeugeinheit, bestehend aus einem Längsschlitten 6, der in Z-Richtung entlang des Bettes 1 bewegbar ist und auf welchem wiederum ein Querschlitten 7 in X-Richtung verfahren werden kann. Auf diesem Querschlitten 7 ist ein Y- Schlitten 8 höhenverstellbar angeordnet, welcher beispielsweise einen Werkzeugrevolver 9 trägt. Auf diesem sind die einzelnen Werkzeuge 10 angeordnet, unter denen sich auch angetriebene Werkzeuge befinden, wie etwa der im oberen Bereich angedeutete, radial bzw. tangential wirkende Bohrer. Um ein solches Werkzeug einsetzen zu können, muß das Werkstück und damit das Futter 2 hinsichtlich der Drehlage genau positioniert und eventuell anschließend definiert langsam bewegt werden können, und zwar mit einer Genauigkeit von mindestens 1/1000 Winkel-Grad.

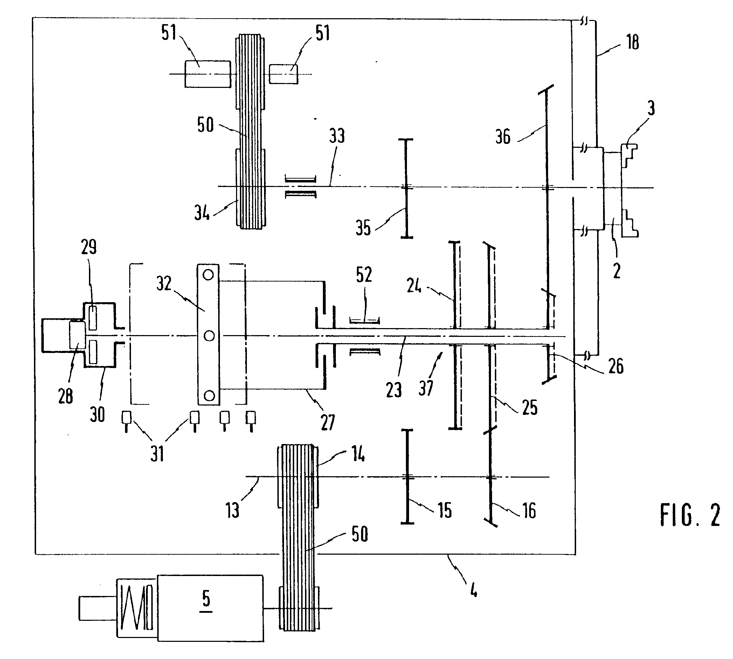

Fig. 2 zeigt eine schematische Darstellung eines erfindungsgemäßen Antriebes, der im Getriebekasten 4 untergebracht ist. Das Getriebe besteht aus einer ersten, zweiten und dritten Getriebewelle 13, 23, 33, wobei die dritte und letzte Getriebewelle 33 üblicherweise als Hauptspindel ausgebildet ist. Die erste und von der Lage her meist auch unterste Getriebewelle 13 wird mittels mehrerer Keilriemen 50 und einer Riemenscheibe 14 von einem ausserhalb des Getriebekastens 4 liegenden Motor 5 angetrieben. Auf dieser ersten Getriebewelle 13 sitzen weiterhin ein parallel verzahntes Zahnrad 15 sowie ein leicht konisches Zahnrad 16 gleicher Zähnezahl und auch gleicher Größe. Zu der parallel zur ersten Getriebewelle 13 angeordneten zweiten Getriebewelle 23 sind drei Zahnräder angeordnet, nämlich ein parallel verzahntes Zahnrad 24 sowie ein großes und ein kleines, leicht konisches Zahnrad 25 und 26. Diese drei Zahnräder können so axial verschoben werden, daß das parallel verzahnte Zahnrad 24 sowie das konische Zahnrad 25 mit den jeweils bauartgleichen Zahnrädern 15, 16 der ersten Getriebewelle 13 in Eingriff kommen. Auf der dritten Getriebewelle 33 sitzen wiederum ein parallel verzahntes Zahnrad 35 sowie ein leicht konisches Zahnrad 36, wobei letzteres mit dem leicht konischen Zahnrad 26 der zweiten Getriebewelle 23 im Eingriff stehen kann, und auch die parallel verzahnten Zahnräder 35 und 24 der dritten bzw. zweiten Getriebewelle können miteinander kämmen.

Die Schaltung des Getriebes erfolgt dadurch, daß die Zahnräder der zweiten Getriebewelle 23 axial verschiebbar sind. Der gegenseitige axiale Abstand der Zahnräder 24, 25, 26 bleibt dabei gleich, so daß diese Verschiebeeinheit 37 insgesamt axial bezüglich der zweiten Getriebewelle verschiebbar ist. Die Verschiebung wird dadurch bewirkt, daß in die Verschiebeeinheit 37 Schieber 27 formschlüssig eingreifen, welche mit einem Steuerbalken 32 fest verbunden sind, der wiederum von einer hydraulischen Kolben/Zylindereinheit betätigt wird. Der in Axialrichtung ausgerichtete hydraulische Zylinder 30 enthält zwei Hydraulikkolben 28 und 29, um den Steuerbalken 32 nicht nur in die beiden möglichen Endstellungen, sondern auch eine definierte Zwischenstellung fahren zu können.

Bei diesen Endstellungen des Steuerbalkens 32 und damit der gesamten Verschiebeeinheit 37 handelt es sich einmal um die linke Endlage, bei der die Hauptspindel und damit die dritte Getriebewelle 33 über miteinander im Eingriff stehende Zahnrad-Paarungen der parallel verzahnten Zahnräder 15, 24 und 35 von der ersten Getriebewelle 13 aus angetrieben wird. Die Getriebeschaltung stellt den Normalbetrieb der Drehmaschine bei maximaler Drehzahl und minimalem Drehmoment dar.

Wird die Verschiebeeinehit 37 dagegen in die rechte Endlage gabracht, so werden dadurch die leicht konischen Zahnräder 16 und 25 bzw. 26 und 36 axial so stark ineinandergeschoben, daß ein spielfreier Antrieb der dritten Getriebewelle 33, also der Hauptspindel, vom Motor 5 aus gegeben ist. Da hierbei wesentlich geringere Drehzahlen der Hauptspindel erforderlich sind, sind die Übersetzungsverhältnisse dieser Getriebeschaltung entsprechend dimensioniert.

Da diese Endlage der Verschiebeeinheit 37 die rechte Endlage ist, sind die Schrägstellungen der beiden leicht konischen Zahnräder 25 und 26 der Verschiebeeinheit 37 so gewählt, daß deren imaginiäre Kegelspitze rechts von den beiden Zahnrädern 25 und 26 liegt und das kleinere der beiden Zahnräder rechts vom größeren angeordnet ist. Entsprechend weisen die imaginären Kegelspitzen der leicht kegeligen Zahnräder 16 und 36, die auf der ersten bzw. dritten Getriebewelle angeordnet sind, von den jeweiligen Zahnrädern nach links, um mit den entsprechenden Zahnrädern der zweiten Getriebewelle kämmen zu können.

Diese beiden Endpositionen der Verschiebeeinheit werden dadurch angefahren und kontrolliert, daß der Steuerbalken 32 hierdurch die beiden äußersten der vorhandenen Sensoren 31 aktiviert, bei denen es sich üblicherweise um die Steuerkanten eines Mehrwegeventils handelt. Bei den Sensoren 31 für die rechte Endstellung handelt es sich jedoch nicht um Endschalter in dem Sinne, daß der auf den Hydraulikkolben 28 und damit die Verschiebeeinheit 37 wirkende Druck nach rechts abgeschaltet wird. Vielmehr muß dieser Druck durchgängig aufrechterhalten werden, um die Spielfreiheit in der rechten Endposition zu gewährleisten.

Zwei zusätzliche Sensoren 31 ermöglichen das Anfahren einer Zwischenposition des Steuerbalkens 32 als auch der Verschiebeeinheit 37. Diese Zwischenposition ist allerdings nur wenige Millimeter von der rechten Endposition entfernt und es sind dabei auch die gleichen leicht konischen Zahnräder miteinander im Eingriff. Jedoch werden die leicht konischen Zahnräder der Verschiebeeinheit 37 nicht mit einem bestimmten Druck bis zur Anlage in die entsprechenden Gegenräder hineingedrückt, sondern die Zahnrad-Paarungen werden unter Verbleib eines normalen Paarungspieles betrieben. Aufgrund der geringen Konizität dieser Zahnräder von etwa 2° ergibt dies eine Axialdistanz gegenüber der spielfreien Stellung von 1 bis 3 mm, so daß die Zwischenlage von der rechten Endlage ebenfalls nur um diese Distanz variiert.

Obwohl das Getriebe selbsthemmend ausgebildet ist, ist an der dritten Getriebewelle 33 eine Backenbremse 52 vorgesehen, um zu verhindern, daß bei stark unwuchtigen Werkstücken oder hohen,
bezüglich des Werkstückes einseitig wirkenden Schnittkräften der angetriebenen Werkzeuge eine unerwünschte Drehung der Hauptspindel und damit des Werkstückes stattfindet. In den beiden rechten Stellungen der Verschiebeeinheit ist auf dieser letzten Getriebestufe die Untersetzung viermal so stark wie in der linken Endstellung der Verschiebeeinheit 37.

In der Fig. 2 ist die gesamte Verschiebeeinheit 37 in der Zwischenposition dargestellt, in der die leicht kegeligen Zahnräder spielbehaftet miteinander im Eingriff stehen. Den spielfreien Eingriff dieser Zahnräder symbolisieren die gestrichelten Linien.

Um bei Betrieb des C-Achsen-Antriebes die Drehlage und die Drehzahl der dritten Getriebewelle 33, also der Hauptspindel und damit des Futters 2, genau kontrollieren und regeln können, befindet sich auf der dritten Getriebewelle 33 ausser dem parallel verzahnten Zahnrad 35, der Backenbremse 52 und dem leicht kegeligen Zahnrad 36 eine Riemenscheibe 34, die die Umdrehung der dritten Getriebewelle 33 über einen oder mehrere Riemen 50 auf eine weitere Riemenscheibe 34 überträgt, die durch Sensoren 51 abgetastet wird. Da die zweite Riemenscheibe keiner mechanischen Belastung unterliegt, arbeitet diese Übertragung völlig ohne Schlupf, so daß die von den Sensoren 51 abgetasteten Werte mit denen der Hauptspindel identisch sind. Da die Meßbereiche derartiger Sensoren relativ klein sind, werden für den Normalbetrieb bei Nenndrehzahl als auch für den verringerten Drehzahlbereich bei C-Achsbetrieb zwei unterschiedliche Sensoren 51 eingesetzt, bei denen es sich meist um opto-elektronische Sensoren handelt.

Ausserhalb des Getriebekastens 4 ist auf der dritten Getriebewelle 33 noch das Futter 2 mit den Backen 3 angedeutet.

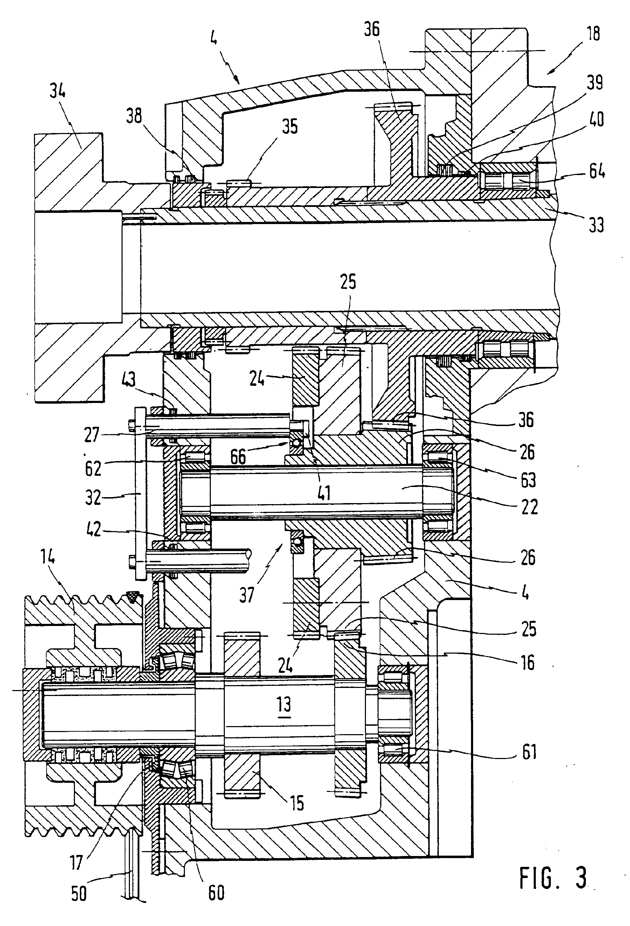

Fig. 3 zeigt eine konkrete bauliche Ausführung eines erfindungsgemäßen Getriebes:

Ebenso wie bei der Schemadarstellung der Fig. 2 sind drei Getriebewellen 13, 22, 33 zu erkennen. Die dritte Getriebewelle 33 ist dabei als Hohlwelle ausgebildet und stellt die Hauptspindel der Drehmaschine dar.

Das ganze Getriebe ist in einem Gehäuse, dem Getriebekasten 4 hinter dem Spindelstock 18 untergebracht. Die unterste, erste Getriebewelle 13 ist über Rollenlager 60, 61 im Getriebekasten 4 gelagert und ragt einseitig über diesen hinaus, da auf diesem frei auskragenden Ende eine Riemenscheibe 14 sitzt, in die über mehrere Keilriemen 50, von denen in der Fig. 3 nur einer beispielhaft dargestellt ist, die Krafteinleitung von einem nicht dargestellten Motor aus erfolgt. Die Riemenscheibe 14 ist dabei kraftschlüssig auf dem freien Ende der ersten Getriebewelle 13 aufgespannt und mittels entsprechenden Dichtungen 17 ist das Innere des Getriebekastens 4 gegenüber der Umgebung abgedichtet.

Im Inneren des Getriebekastens 4 sitzen auf der ersten Getriebewelle 13 drehfest und in axialer Richtung nicht verschiebbar in der Nähe der linken Lagerstelle ein parallel verzahntes Zahnrad 15 und in der Nähe der rechten Lagerstelle ein leicht konisches Zahnrad 16, dessen Neigung zur linken Seite hinweist.

Auch die als Hohlwelle ausgebildete dritte Getriebewelle 33, die über Wälzlager 64 im Spindelstock 18 abgestützt ist, erstreckt sich auf derselben Seite wie die erste Getriebewelle 13 ebenfalls über den Getriebekasten 4 hinaus. An diesem freien Ende ist die dritte Getriebewelle 33 als Riemenscheibe 34 ausgebildet, um Drehwinkel und Drehzahl der Hauptspindel belastungs- und schlupffrei an eine nicht dargestellte weitere Riemenscheibe übertragen zu können, die lediglich zum Abgriff des Drehwinkels bzw. der Drehzahlen durch geeignete Sensoren zwecks Steuerung des Hauptantriebes dient. Auch bei dieser dritten Getriebewelle 33 erfolgt selbstverständlich eine entsprechende Abdichtung des Inneren des Getriebekastens über geeignete Dichtungen 38, 39, 40.

Während die beiden Zahnräder auf der ersten Getriebewelle 13 etwa gleich groß sind, befindet sich auf der dritten Geriebewelle 33 in der Nähe der linken Gehäusewand ein kleines parallel verzahntes Zahnrad 35, während sich in der Nähe der rechten Stirnwand ein weitaus größeres, leicht konisches Zahnrad 36 befindet. Auch hier ist die Neigung des konischen Zahnrades 36 so gewählt, daß die imaginäre Kegelspitze zur Seite des anderen Zahnrades hinweist, und die Neigung der Umfangsfläche dieses Zahnrades beträgt etwa 2° mit einer entsprechenden Verjüngung des Zahnquerschnittes in diese Richtung. Auch diese beiden Zahnräder 35, 36 sind drehfest und in Axialrichtung nicht verschieblich auf der hohlen dritten Getriebewelle 33 befestigt.

Zwischen der ersten und der dritten Getriebewelle 13 bzw. 33 ist eine zweite Getriebewelle 22 angeordnet, die ebenfalls über Wälzlager 62, 63 im Getriebekasten 4 gelagert ist. Auf dieser zweiten Getriebewelle 22 befinden sich die axial verschiebbaren Zahnräder, die für die Schaltbarkeit des erfindungsgemäßen Getriebes notwendig sind. Dabei handelt es sich um drei Zahnräder, die in axialer Richtung fest miteinander verbunden sind und gemeinsam als Verschiebeeinheit 37 entlang der zweiten Getriebewelle 22 verschiebbar sind.

Diese Verschiebeeinheit 37 besteht, von links nach rechts fortlaufend, aus einem geradverzahnten Zahnrad 24, welches in der linken Endstellung der Verschiebeeinheit sowohl mit dem parallel verzahnten Zahnrad 15 der ersten Getriebewelle 13 als auch mit dem parallel verzahnten Zahnrad 35 der dritten Getriebewelle 33 kämmt. Neben diesem Zahnrad 24 befindet sich ein etwa gleich großes leicht konisches Zahnrad 25, dessen Zahnschräge nach rechts weist, so daß es in Eingriff mit dem entgegengesetzten schräg gestellten konischen Zahnrad 16 auf der rechten Seite der ersten Getriebewelle 13 bringbar ist. Wenn dies der Fall ist, kämmt gleichzeitig das dritte Zahnrad der Verschiebeeinheit 37, ein wesentlich kleineres, leicht konisches Zahnrad 26, mit dem konischen Zahnrad 36 der dritten Getriebewelle 33.

Aufgrund dieser Größenverhältnisse findet bei der Getriebestellung, bei der die konischen Zahnräder miteinander in Eingriff stehen, eine wesentlich stärkere Untersetzung statt als bei der linken Endlage der Verschiebeeinheit 37 der mittleren Getriebewelle 22.

Die Verschiebeeinheit 37 wird dadurch verschoben, daß auf dieser sich drehenden Verschiebeeinheit 37 ein zusätzliches Wälzlager 66 sitzt, dessen einer Laufring mit der Verschiebeeinheit 37 dreht, während am anderen, stillstehenden Laufring hintergreifende Nasen 41 den Schieber 27 in axialer Richtung fest mit dem stillstehenden Laufring des Lagers 66 verbinden. Diese Schieber 27 erstrecken sich durch die Aussenwand des Getriebekastens 4 nach außen, wo der Durchgang wiederum durch Dichtungen 42, 43 abgedichtet ist. Die einzelnen Schieber 27 sind über einen quer verlaufenden Steuerbalken 32 miteinander verbunden, und werden damit gemeinsam in axialer Richtung betätigt, vermittels der in der Fig. 2, nicht jedoch in der Fig. 3 dargestellten Hydraulikeinheit, bestehend aus dem Zylinder 30 sowie den Hydraulikkolben 28 und 29. Dabei wird die Kontrolle und Ansteuerung der Istlage des Steuerbalkens 32 und damit der gesamten Schiebeeinheit 37 realisiert, indem die Axialbewegung z.B. des Steuerbalkens 32 den Kolben eines Mehrwegeventils steuert, wie in Fig. 2 beschrieben.

Ebenso wie in der Schemadarstellung der Fig. 2 kann auch das ausgeführte Getriebe der Fig. 3 bei Eingriff der konischen Zahnräder 16, 25, 26, 36, zunächst die spielfreie, rechte Endstellung einnehmen, bei der diese Zahnräder immer mit einer
vorgegebenen Kraft, bewirkt durch die hydraulische Beaufschlagung der Verschiebeeinheit 37 gegen die axial feststehenden konischen Zahnräder 16 bzw. 36, ineinander gedrückt werden. Wird die Verschiebbeinheit von dieser rechten Endstellung aus um eine Distanz im Millimeterbereich nach links zurückgezogen, so befinden sich zwar immer noch die gleichen vier konischen Zahnräder miteinander in Eingriff, jedoch nunmehr unter dem üblichen Spiel einer Zahnrad-Paarung, welches zwar einen sehr viel geringeren Verschleiß der Zahnrad-Paarungen mit sich bringt, andererseits keine exakte Weitergabe geringer Drehbewegungen ermöglicht.

Somit läßt sich die Hauptspindel 33 sowohl über die parallel verzahnten Zahnräder spielbehaftet mit Nenndrehzahl antreiben, als auch über die schräg verzahnten Zahnräder spielbehaftet mit einer verringerten Drehzahl. Mit der gleichen verringerten Drehzahl kann die Hauptspindel jedoch auch spielfrei angetrieben werden, wie es für den Betrieb der C-Achse notwendig ist.

## Patentansprüche

1. Schaltbares Getriebe zum Antrieb der das Werkstück tragenden Hauptspindel einer Drehmaschine, wobei das Getriebe mehrere Getriebewellen umfaßt, von denen die erste mittels eines drehzahlregelbaren Motors antreibbar ist und die letzte mit der Hauptspindel in Antriebsverbindung steht, wobei das Getriebe wenigstens eine Schaltposition aufweist, in der die erste Getriebewelle mit der letzten Getriebewelle ausschließlich durch spielfreigehaltene Zahnradpaarungen drehantriebbar gekoppelt ist,
**dadurch gekennzeichnet**, daß
- das Getriebe durch Axialverschiebung von Zahnrädern schaltbar ist,
- die letzte Getriebewelle (33) die Hauptspindel darstellt,
- das Getriebe ausschließlich die für die Drehbearbeitung notwendigen Übersetzungsstufen enthält,
- die spielfrei gehaltenen Zahnradpaarungen (16, 25 bzw. 26, 36) aus leicht konischen Zahnrädern bestehen, und
- von den beim spielfreien Antrieb in Eingriff stehenden Zahnradpaarungen (16, 25 bzw. 26, 36) jeweils ein leicht konisches Zahnrad mittels eines Schiebers (27) um eine solche Strecke axial in eine neue Getriebe-Schaltposition verfahrbar ist, daß die bestehenden Zahnradpaarungen (16, 25 bzuw. 26, 36) im Eingriff bleiben, jedoch spielbehaftet, also mit normalem Zahntragbild, miteinander kämmen.

2. Getriebe nach Anspruch 1,
**gekennzeichnet** durch
- eine erste Getriebewelle (13), die vom Motor (5) über Keilriemen (50) angetrieben ist und auf der ein parallel verzahntes Zahnrad (15) sowie ein leicht konisches Zahnrad (16) sitzen,
- eine zweite Getriebewelle (23), die wenigstens ein parallel verzahntes (24) sowie wenigstens eines der leicht konischen Zahnräder (25, 26) aufweist, die gemeinsam axial verschoben werden können, so daß je eines der parallelen und der leicht konischen Zahnräder mit den jeweils bauartgleichen Zahnrädern (15, 16) der ersten Getriebewelle (13) in Eingriff bringbar sind und
- eine dritte Getriebewelle (33), die ein parallel verzahntes (35) sowie ein leicht konisches Zahnrad (36) trägt, die mit je einem bauartgleichen Zahnrad der zweiten Getriebewelle (23) in Eingriff bringbar sind, wobei diese dritte Getriebewelle (33) als Hauptspindel zur Aufnahme des Futters (2) für die Werkstücke ausgebildet ist.

3. Getriebe nach Anspruch 2,
**dadurch** **gekennzeichnet**, daß die Zahnräder (24, 25, 26) der zweiten Getriebewelle (23) zu einer Verschiebeeinheit (37) miteinander verbunden sind, welche entlang der zweiten Getriebewelle (23) verschiebbar ist.

4. Getriebe nach Anspruch 3,
**dadurch gekennzeichnet**, daß die Verschiebeeinheit (37) ein Wälzlager (66) aufweist, von dem ein Laufring fest mit der Verschiebeeinheit verbunden ist, und an dessen anderem Laufring axial verschiebbare, nicht drehende Schieber (27) angreifen, über deren Axialbewegung die Verschiebeeinheit (37) zwischen der linken und der rechten Endlage hin und her bewegt werden kann.

5. Getriebe nach einem der vorhergehenden Ansprüche,
**dadurch gekennzeichnet**, daß
auf einer der Getriebewellen (13, 23, 33) eine mechanische Bremse angeordnet ist.

6. Getriebe nach Anspruch 5,
**dadurch gekennzeichnet**, daß
es sich bei der mechanischen Bremse um eine Backenbremse handelt.

7. Getriebe nach Anspruch 5 oder 6,
**dadurch gekennzeichnet**, daß
sich die Bremse auf der dritten Getriebewelle (33) befindet.

8. Getriebe nach einem der vorhergehenden Ansprüche,
**dadurch gekennzeichnet**, daß
es sich bei den leicht konischen Zahnrädern (16, 25, 26, 36) um geradverzahnte Zahnräder handelt.

9. Getriebe nach einem der Ansprüche 1 bis 8,
**dadurch gekennzeichnet**, daß
es sich bei den leicht konischen Zahnrädern (16, 25, 26, 36) um schrägverzahnte konische Zahnräder handelt.

## Claims

1. Change-over gearing for driving the main, workpiece-carrying spindle of a lathe, wherein the gearing comprises several gear shafts, the first of which can be driven by means of a speed-regulated motor, and the last of which is connected for driving to the main spindle, wherein the gearing has at least one position in which the first gear shaft is coupled for rotary operation exclusively to the last gear shaft by means of gear pairs maintained without play, characterised in that
- the gearing can be changed over by the axial displacement of gear wheels,
- the last gear shaft (33) is the main spindle,
- the gearing exclusively comprises the transmission steps required for lathing,
- the gear pairs (16, 25 and 26, 36, respectively) maintained without play consist of slightly conical gear wheels, and
- one respective slightly conical gear wheel of the gear pairs (16, 25 and 26, 36, respectively) which are engaged during drive without play, can be moved axially to a new gearing position by means of a slider (27) by a distance such that the respective gear pairs (16, 25 and 26, 36) concerned remain engaged, though with play, and thus mesh together with a normal tooth contact pattern.

2. Gearing according to claim 1, characterised by
- a first gear shaft (13) which is driven by the motor (5) by way of V-belts (50) and on which there are seated both a gear wheel (15) having parallel toothing and a slightly conical gear wheel (16),
- a second gear shaft (23) which has at least one gear wheel (24) having parallel toothing and at least one of the slightly conical gear wheels (25, 26), which gear wheels can be displaced axially jointly so that one of the parallel gear wheels and the slightly conical gear wheels, respectively, can be brought into engagement with the respective gear wheels (15, 16) of the first gear shaft (13), which gear wheels have the same design, and
- a third gear shaft (33) which carries both a gear wheel (35) having parallel toothing and a slightly conical gear wheel (36), which gear wheels can be brought into engagement with a respective gear wheel of the second gear shaft (23), this gear wheel having the same design, whereby this third gear shaft (33) is constructed as a main spindle for holding the chuck (2) for the workpieces.

3. Gearing according to claim 2, characterised in that the gear wheels (24, 25, 26) of the second gear shaft (23) are connected together to form a sliding unit (37) which can slide along the second gear shaft (23).

4. Gearing according to claim 3, characterised in that the sliding unit (37) has a rolling-contact bearing (66), one runner ring of which is rigidly connected to the sliding unit, with axially displaceable, non-rotating sliders (27) engaging with its other runner ring, whereby the sliding unit (37) can be moved backwards and forwards between the left-hand and right-hand limit positions by means of the axial movement of these sliders (27).

5. Gearing according to one of the preceding claims, characterised in that a mechanical brake is arranged on one of the gear shafts (13, 23, 33).

6. Gearing according to claim 5, characterised in that the mechanical brake comprises a block brake.

7. Gearing according to claim 5 or 6, characterised in that the brake is located on the third gear shaft (33).

8. Gearing according to one of the preceding claims, characterised in that the slightly conical gear wheels (16, 25, 26, 36) comprise gear wheels having straight toothing.

9. Gearing according to one of claims 1 to 8, characterised in that the slightly conical gear wheels (16, 25, 26, 36) comprise conical gear wheels having helical teeth.

## Revendications

1. Transmission embrayable pour entraîner l'arbre moteur d'un tour portant la pièce à usiner, ladite transmission comprenant plusieurs arbres dont le premier peut être entraîné à l'aide d'un moteur à nombre de tours réglable et le dernier est en liaison d'entraînement avec l'arbre moteur, la transmission présentant au moins une position d'embrayage dans laquelle le premier arbre est couplé avec le dernier arbre de manière à pouvoir être entraîné en rotation exclusivement par des engrenages jumelés à jeu libre, caractérisée en ce que :
- la transmission peut être embrayée par déplacement axial de roues dentées,
- le dernier arbre (33) de la transmission représente l'arbre moteur,
- la transmission contient exclusivement les étages de démultiplication indispensables au traitement de tournage,
- les roues dentées jumelées à jeu libre (16, 25 ou 26, 36) sont constituées de roues dentées légèrement coniques, et
- parmi les roues dentées jumelées (16, 25 ou 26, 36) coopérant par entraînement sans jeu, respectivement, une roue dentée légèrement conique peut être déplacée axialement à l'aide d'un curseur (27) dans une nouvelle position d'embrayage de la transmission sur une trajectoire telle que les roues dentées jumelées existantes (16, 25 ou 26, 36) restent engrenées, mais coopèrent mutuellement avec un certain jeu, donc avec une portée normale des dents.

2. Transmission selon la revendication 1, caractérisée par :
- un premier arbre de transmission (13), qui est entraîné par le moteur (5) via une courroie trapézoïdale (50) et s'appuie sur une roue dentée à denture parallèle (15) ainsi que sur une roue dentée légèrement conique (16),
- un deuxième arbre de transmission (23) qui présente au moins une roue dentée à denture parallèle (24) ainsi qu'au moins une des roues dentées légèrement coniques (25, 26), qui peuvent être déplacées axialement conjointement de telle sorte que l'une des roues dentées, à savoir celle qui est parallèle et celle qui est légèrement conique, puisse s'engrener dans les roues dentées respectivement de même type (15, 16) du premier arbre de transmission (13) et
- un troisième arbre de transmission (33) qui porte une roue dentée à denture parallèle (35) ainsi qu'une roue dentée légèrement conique (36), qui peuvent être engrenées sur respectivement une roue dentée de même type du deuxième arbre de transmission (23), ce troisième arbre de transmission (33) étant conformé en arbre moteur pour recevoir le mandrin (2) des pièces à usiner.

3. Transmission selon la revendication 2, caractérisée en ce que les roues dentées (24, 25, 26) du deuxième arbre de transmission (23) sont reliées l'une à l'autre avec une unité de déplacement (37) qui peut se déplacer le long du deuxième arbre de transmission (23).

4. Transmission selon la revendication 3, caractérisée en ce que l'unité de déplacement (37) présente un palier à roulement (66) par lequel une bague de roulement est solidement fixée à l'unité de déplacement et sur l'autre bague de roulement duquel s'engrènent des curseurs (27) déplaçables axialement, mais non rotatifs, dont le déplacement axial permet le déplacement de l'unité de déplacement (37) selon un mouvement de va-et-vient entre la position finale de gauche et la position finale de droite.

5. Transmission selon l'une quelconque des revendications précédentes, caractérisée en ce qu'un frein mécanique est agencé sur l'un des arbres de transmission (13, 23, 33).

6. Transmission selon la revendication 5, caractérisée en ce que le frein mécanique est un frein à mors.

7. Transmission selon la revendication 5 ou 6, caractérisée en ce que le frein se trouve sur le troisième arbre de transmission (33).

8. Transmission selon l'une quelconque des revendications précédentes, caractérisée en ce que, dans le cas des roues dentées légèrement coniques (19, 25, 26, 36), il s'agit de roues dentées à denture droite.

9. Transmission selon l'une quelconque des revendications 1 à 8, caractérisée en ce que, dans le cas des roues dentées légèrement coniques (16, 25, 26, 36), il s'agit de roues dentées coniques à denture en biais.
